# EUROPEAN PATENT APPLICATION

(11) **EP 4 772 445 A1**
(43) Date of publication of application: **08.07.2026**
(21) Application number: 24865313.1
(22) Date of filing: 03.09.2024
(51) Int. Cl.: B64U 80/25, B64U 10/14, E04H 6/44, H02J 7/00, H02J 7/35

(54) **CHARGING STATION FOR UNCREWED AIRCRAFT**

(30) Priority: 12.09.2023 JP 2023147935
(71) Applicant: NTN Corporation, Osaka-shi Osaka 530-0005 (JP)
(72) Inventor: AKAGAWA, Mitsuru, Tokyo 108-0075 (JP)
(74) Representative: Bandpay & Greuter
(86) International application number: PCT/JP2024/031584
(87) International publication number: WO 2025/057811

(57) **Abstract**

A charging station (1) includes: a power generator equipment (5) including at least one of a photovoltaic generator unit and a wind turbine generator unit; a storage battery (6) configured to store power generated by the power generator equipment (5); a controller unit (7) configured to execute control so as to direct power generated by the power generator equipment (5) into the storage battery (6) and draw power accumulated in the storage battery (6) into the charger device (8); and a housing (2) configured to house the storage battery (6) and the controller unit (7). An opening/closing part (12) is provided in the housing (2). The charger device (8) is provided inside the opening/closing part (12) or the housing (2). The uncrewed aircraft (10) landing on the charger device (8) is housed in the housing (2) by closing the opening/ closing part (12).

## Description

### CROSS REFERENCE TO THE RELATED APPLICATION

0001 This application is based on and claims Convention priority to Japanese patent application No. 2023-147935, filed September 12, 2023, the entire disclosure of which is herein incorporated by reference as a part of this application.

### BACKGROUND OF THE INVENTION

### (Field of the Invention)

0002 The present invention relates to a charging station that is capable of charging an uncrewed aircraft with power generated from natural energy, and excels in crime prevention.

### (Description of Related Art)

0003 Flying distance and flying time of an uncrewed aircraft such as a drone depend on a battery mounted on the uncrewed aircraft. One method to extend flying distance and flying time is to provide a charging system using a photovoltaic generator unit at an airfield (for example, Patent Document 1).

### [Related Document]

### [Patent Document]

0004 [Patent Document 1] JP Laid-open Patent Publication No. 2022-044169

### SUMMARY OF THE INVENTION

0005 In Patent Document 1, since a top of a landing port of the uncrewed aircraft is open, there is a risk that the uncrewed aircraft is stolen while charging. In addition, a problem due to installing a solar panel is that it is difficult to install and transport the charging station.

0006 An object of the present invention is to solve the above problem, i.e., to provide a charging station for an uncrewed aircraft which is easy to install and can be transported without a risk that the uncrewed aircraft is stolen while charging.

0007 To achieve the above object, a charging station according to the present invention includes: a charger device capable of charging an uncrewed aircraft; a power generator equipment including at least one of a photovoltaic generator unit and a wind turbine generator unit; a storage battery configured to store power generated by the power generator equipment; a controller unit configured to execute control so as to direct power generated by the power generator equipment into the storage battery and draw power accumulated in the storage battery into the charger device; and a housing configured to house the storage battery and the controller unit; wherein
an opening/closing part is provided in the housing;
the charger device is provided inside the opening/closing part or the housing; and
the uncrewed aircraft landing on the charger device is housed in the housing by closing the opening/ closing part.

0008 According to this configuration, the uncrewed aircraft can be charged with power generated from natural energy. In addition, since the uncrewed aircraft is housed in the housing by closing the opening/closing part, it is possible to mitigate theft of and mischief on the uncrewed aircraft, thereby exceling in crime prevention.

0009 In the charging station of the present invention, the opening/closing part may be provided on a side wall or a top wall.

0010 According to this configuration, the position of the opening/closing part can be freely selected depending on the installation environment of the housing.

0011 In the charging station of the present invention, a protection fence facing the opening/closing part may be provided inside the housing.

0012 According to this configuration, when the opening/closing part is open, the protection fence can prevent humans and animals from entering the inside of the housing, exceling in crime prevention.

0013 In the charging station of the present invention, the housing may be a transportable container.

0014 According to this configuration, since the housing can be transported by a truck, it is possible to make easier the operations of installing and removing the housing.

0015 The charging station of the present invention may have a communication device that opens and closes the opening/closing part, monitors the condition of the uncrewed aircraft, the power generator equipment, the storage battery and the charger device, and charges the uncrewed aircraft from the outside of the housing.

0016 According to this configuration, it is possible to monitor and operate the condition of the uncrewed aircraft and the charging station from a remote place, which enhances the usability experienced by a user of the charging station.

0017 Any combinations of at least two features disclosed in the claims and/or the specification and/or the drawings should also be construed as encompassed by the present invention. Especially, any combinations of two or more of the claims should also be construed as encompassed by the present invention.

### BRIEF DESCRIPTION OF THE DRAWINGS

0018 The present invention will be more clearly understood from the following description of preferred embodiments made by referring to the accompanying drawings. However, the embodiments and the drawings are given merely for the purpose of illustration and explanation, and should not be used to delimit the scope of the present invention, which scope is to be delimited by the appended claims. In the accompanying drawings, alike symbols indicate alike or corresponding parts throughout the different figures, and:
Fig. 1 is a perspective view of a charging station according to a first embodiment of the present invention;
Fig. 2A is a perspective view illustrating an operation of the charging station according to the first embodiment;
Fig. 2B is a side view illustrating the inside of the charging station according to the first embodiment;
Fig. 3A is a longitudinal cross-sectional view illustrating an operation of the charging station according to the first embodiment;
Fig. 3B is a longitudinal cross-sectional view illustrating the completion of the operation of Fig. 3A;
Fig. 4A is a perspective view of a charging station according to a second embodiment of the present invention;
Fig. 4B is a side view of the charging station according to the second embodiment;
Fig. 5A is a perspective view of a charging station according to a third embodiment of the present invention;
Fig. 5B a side view illustrating the inside of the charging station according to the third embodiment;
Fig. 6A is a longitudinal cross-sectional view illustrating an operation of the charging station according to the third embodiment;
Fig. 6B is a longitudinal cross-sectional view illustrating the completion of the operation of Fig.6A;
Fig. 7A is a perspective view of a charging station according to a fourth embodiment of the present invention;
Fig. 7B is a side view of the charging station according to the fourth embodiment;
Fig. 8 is a perspective view of a charging station according to a fifth embodiment of the present invention;
Fig. 9A a longitudinal cross-sectional view illustrating an operation of the charging station according to the fifth embodiment; and
Fig. 9B is a longitudinal cross-sectional view illustrating the completion of the operation of Fig.9A.

### DESCRIPTION OF EMBODIMENTS

### 0019 [First Embodiment]

A charging station 1 according to a first embodiment of the present invention will be described.

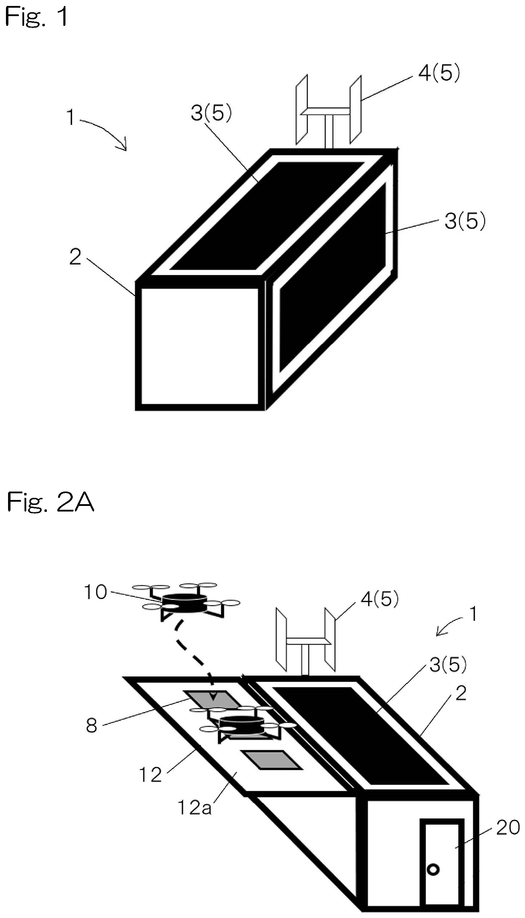

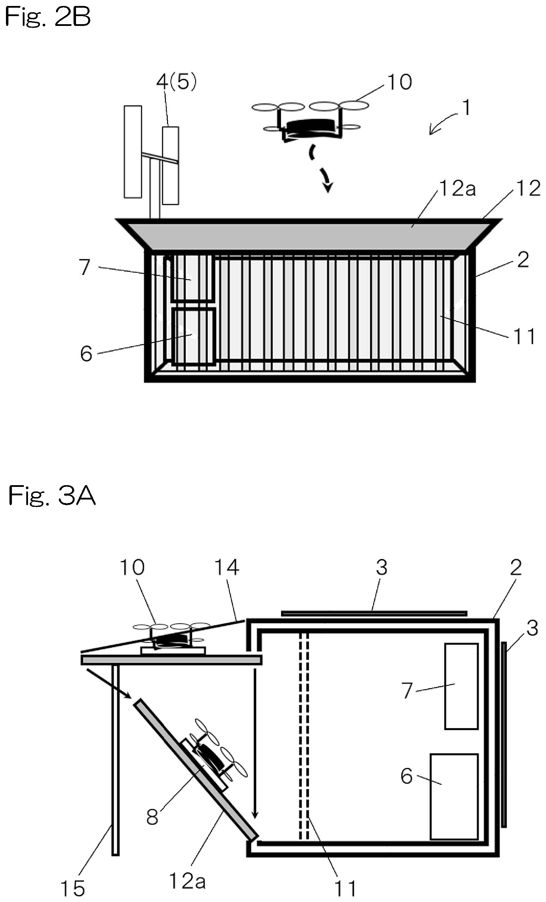

As shown in Fig. 1, the charging station 1 is formed by a hosing 2 that houses a person or an uncrewed aircraft in its inside. A solar panel 3 that constitutes a photovoltaic generator unit is provided on a top surface or top and side surfaces of the housing 2. A wind turbine 4 that constitutes a wind turbine generator unit is provided on the side surface of the housing 2. The solar panel 3 and the wind turbine 4 are configured to be detachable from the housing 2 and constitute a power generator equipment 5. Either the solar panel 3 or the wind turbine 4, especially the wind turbine 4 may not be provided. In this way, the power generator equipment 5 includes at least one of the photovoltaic generator unit 3 and the wind turbine generator unit 4. The solar panel 3, a controller unit 7 that electrically controls the wind turbine 4 and a storage battery 6 shown in Fig. 2B and a charger device 8 for charging the storage battery 6 and an uncrewed aircraft 10 of Fig. 2A are provided inside the housing 2 of the charging station 1. The controller unit 7 of Fig. 2B includes, for example, an AC/DC converter that converts AC power generated by the power generator equipment 5 into DC power that can be stored in the storage battery 6. Power may be supplied to the uncrewed aircraft 10 through contact power supply or wireless power supply from the charger device 8 of Fig. 2A.

0020 As shown in Fig. 2A, using a guy wire 14 and a tower 15, the charging station 1 holds the housing 2 at a high position with an inner surface of one side wall 12 facing upward by opening the opening/closing part 12a that forms the side wall 12. This opens one side surface of the housing 2. The charger device 8 of the uncrewed aircraft 10 is provided on an inner surface of the opening/closing part 12a. A plurality of the charger devices 8 may be provided. An entrance 20 may be provided on the other side wall that does not open and close.

0021 While the uncrewed aircraft 10 lands on the charger devices 8 of the opening/closing part 12a of the housing 2, it is possible to supply power generated by solar light and/or wind power on the spot to charge the uncrewed aircraft 10.

0022 As shown in Fig. 2B, a protection fence (fence) 11 facing the opening/closing part 12a inside the housing 2 is provided. The fence 11 is detachable from the inside of the housing 2.

0023 By providing the fence 11 facing the opening/closing part 12a inside the housing 2, even when the side surface of the housing 2 is open, it is possible to prevent humans and animals from entering the inside of the housing 2. In addition, since the fence 11 cannot be removed from the outside of the housing 2, it is possible to reduce the risk of theft, mischief and electric shock of the controller unit 7 and the storage battery 6.

0024 The housing 2 of the charging station 1 is preferably a container constituted by columns and beams. According to this configuration, the housing 2 can have strength sufficient for withstanding transportation by truck or cargo ship, which makes it possible to easily move the charging station 1 according to the change of a place of demand of the uncrewed aircraft 10.

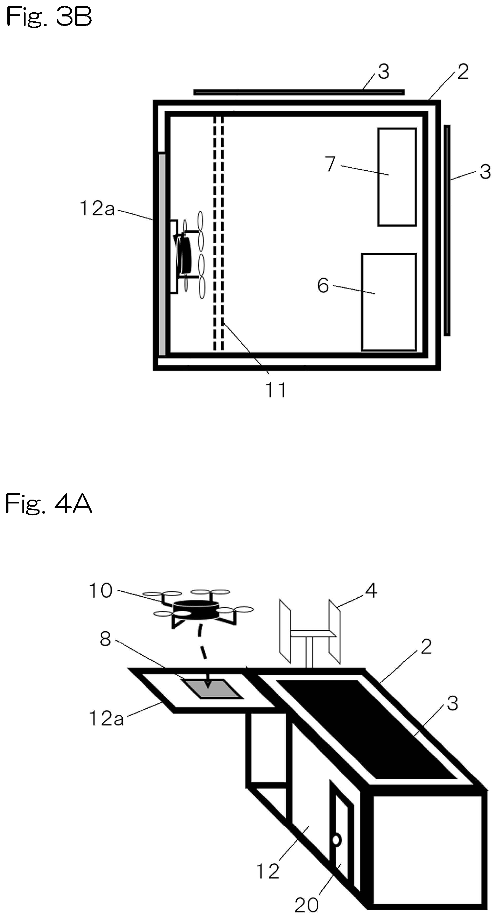

0025 As shown in Fig. 3A, the opening/closing part 12a is configured to be closed so as to house the uncrewed aircraft 10 grounded on the charger device 8 into the inside of the housing 2. Fig. 3B shows the opening/closing part 12a in a closed state.

0026 Thanks to the configuration in which the uncrewed aircraft 10 is housed inside the housing 2, it is possible to mitigate theft of and mischief on the uncrewed aircraft 10 during charging the uncrewed aircraft 10, thereby exceling in crime prevention. In addition, inspection and maintenance of the uncrewed aircraft 10 housed in the housing 2 are facilitated.

0027 The charging station 1 has a communication device that can operate the charging station 1 from a remote place. The communication device may be any of wireless communication using a ground network such as 3G, LTE, 5G, LPWA, Wi-Fi and Wi-SUN, non-ground network communication using satellites or wired communication such as an optical cable.

0028 By installing the communication device on the charging station 1, it is possible, from a remote place, to open and close the housing 2, monitor the condition of the uncrewed aircraft 10, the power generator equipment 5, the storage battery 6 and the charger device 8 and charge the uncrewed aircraft from the outside of the housing, which enhances the usability experienced by a user of the charging station 1.

0029 The charger device 8 may include walls surrounding a side surface of the charger device 8 or a mechanism for holding the uncrewed aircraft 10 by a fixing bar. According to this configuration, it is possible to prevent the uncrewed aircraft 10 from moving away from the charger device 8 during supplying power to the uncrewed aircraft 10.

0030 The charging station 1 may have sensing equipment such as a pressure sensitive sensor or a photoelectric sensor, or a monitoring camera to confirm whether the uncrewed aircraft 10 lands on the charger device 8 properly.

0031 Sensing equipment such as a pressure sensitive sensor or a photoelectric sensor, or a monitoring camera may be provided to monitor whether humans and animals enter the housing 2 when the housing 2 is housed in the uncrewed aircraft 10. Further, when abnormality is detected, a speaker or a monitor may be provided to issue a warning from a remote place.

0032 Incidentally, in addition to charging the uncrewed aircraft 10, power generated by solar light or wind power (hereinafter sometimes referred to as natural energy) can be supplied to an opening/closing device, the communication device, lighting and an air conditioner of the housing 2. In addition to natural energy, a grid power system may also be used. It may be possible to supply power to the uncrewed aircraft 10 from the charger device 8 and to lighting and an air conditioner in the charging station through the controller unit 7. Moreover, the charging station 1 may have a function to automatically switch the grid power system to natural energy when power supply is stopped from the grid power system by a disaster or other incidents.

0033 According to the above configurations, power can be generated by solar light and/or wind power during charging or waiting for charging the uncrewed aircraft 10. Further, the setup cost in areas where there is no electricity available and where it is, therefore, difficult to secure power supply can be reduced thanks to simple installation work by obviating the need to conduct construction works for newly installing utility poles and power lines.

### 0034 <Further Embodiments>

In the remainder of the discussion, features corresponding to those previously discussed features with respect to preceding embodiment(s) will be indicated with the same reference symbols and will not be described again to avoid redundancy. Where only a subset of features is discussed, the remaining features should be regarded as analogous to those of the preceding embodiment(s) unless otherwise noted. Identical features produce identical benefits and effects. In addition to particular combinations of features discussed with respect to each of the embodiments, the embodiments themselves can be partially combined with each other, unless such combinations are found to be inoperable.

### 0035 [Second Embodiment]

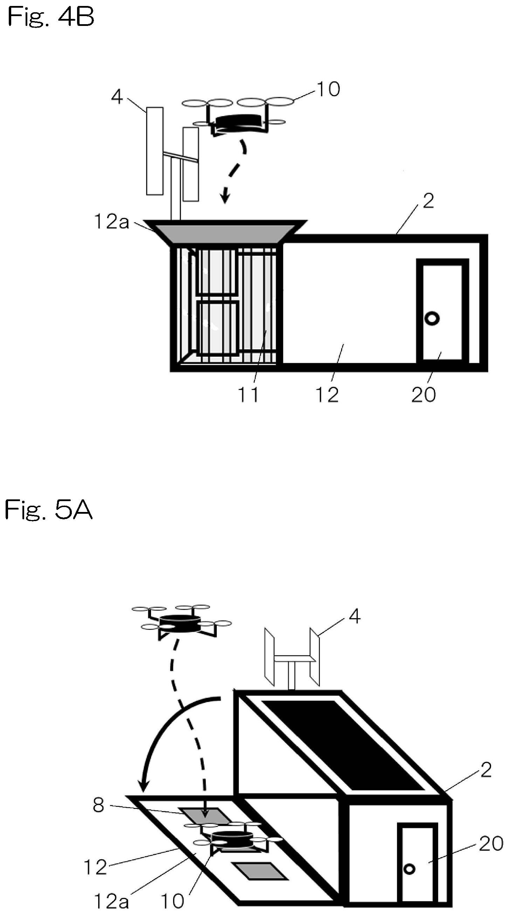

The charging station 1 according to a second embodiment of the present invention will be described with Figs. 4A and 4B. As shown in Fig. 4A, a part of the side wall 12 of the charging station 1 is open upward as the opening/closing part 12a, and the charger device 8 of the uncrewed aircraft 10 is provided on the inner surface of the opening/closing part 12a. The entrance 20 may be provided on a part of the side wall 12 that does not open.

0036 As shown in Fig. 4B, according to the charging station 1 according to this embodiment, since an area of the opening/closing part 12a is smaller than that of the charging station 1 according to the first embodiment (Fig. 2B), it is possible to reduce the costs of an opening/closing mechanism and the fence 11.

### 0037 [Third Embodiment]

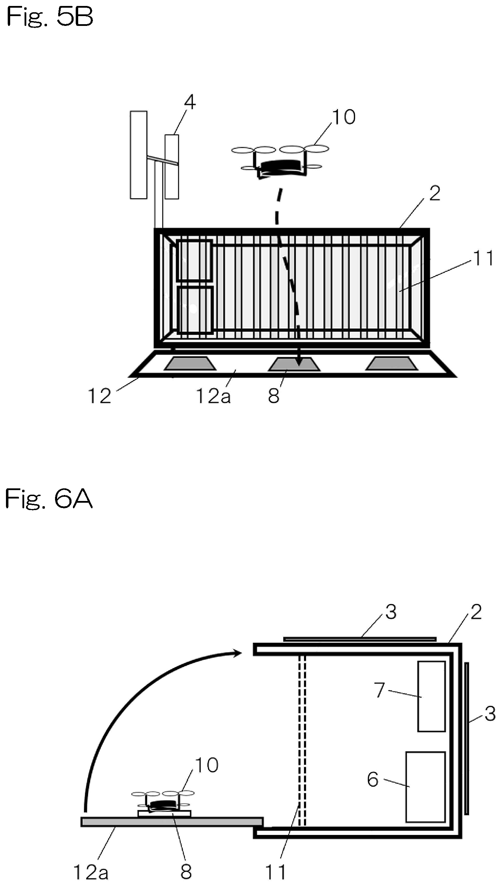

The charging station 1 according to a third embodiment of the present invention will be described with Figs. 5A and 5B. As shown in Fig. 5A, the entire side wall 12 of the charging station 1 is open and closed downward as the opening/closing part 12a. In the state where the side wall 12 is open, the charger device 8 of the uncrewed aircraft 10 is provided on the inner surface, which is an upper side, of the opening/closing part 12a.

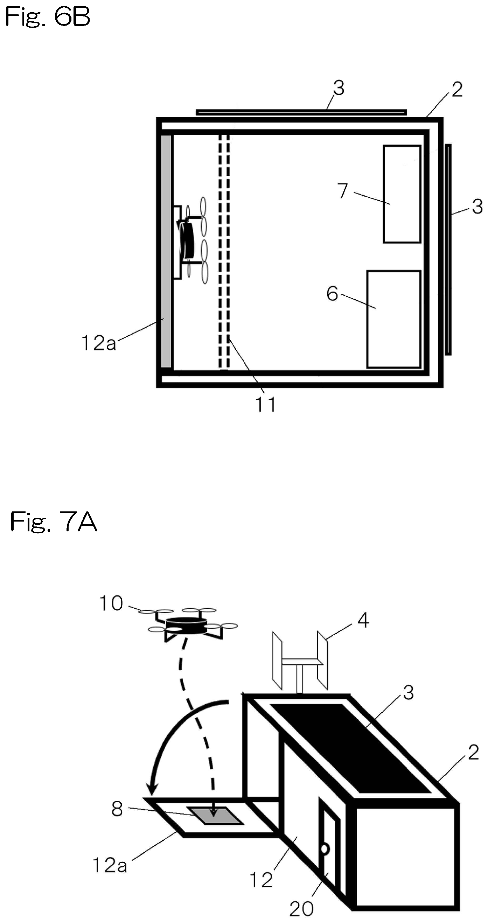

0038 As shown in Fig. 6A, according to the charging station 1 according to this embodiment, since the opening/closing mechanism of the opening/closing part 12a is simpler than that of the charging station 1 according to the first and second embodiments (Fig. 3B), it is possible to provide the charging station 1 at a lower cost. Fig. 6B shows the opening/closing part 12a in a closed state.

### 0039 [Fourth Embodiment]

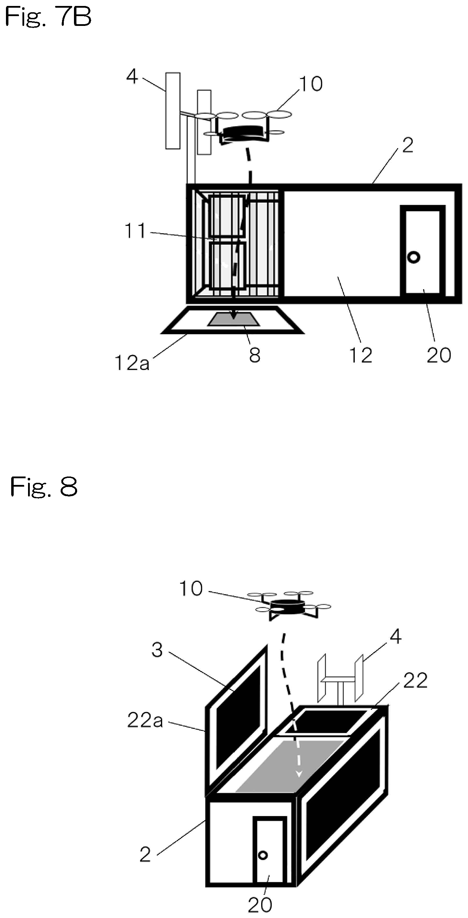

The charging station 1 according to a fourth embodiment of the present invention will be described with Figs. 7A and 7B. As shown in Fig. 7A, a part of the side wall 12 of the charging station 1 is open downward as the opening/closing part 12a. In the state where the part of the side wall 12 is open, the charger device 8 of the uncrewed aircraft 10 is provided on the inner surface, which is the upper side, of the opening/closing part 12a.

### 0040 As shown in Fig. 7B, according to the charging station 1 according to this embodiment, since an area of the opening/closing part 12a is smaller than that of the charging station 1 according to the third embodiment (Fig. 5B), it is possible to reduce the costs of the opening/closing mechanism and the fence 11.

### 0041 [Fifth Embodiment]

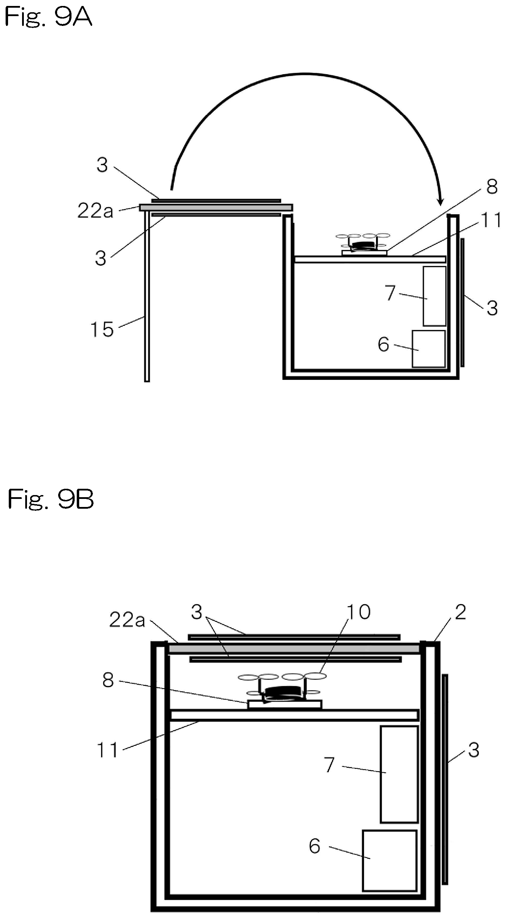

The charging station 1 according to a fifth embodiment of the present invention will be described with Figs. 8, 9A and 9B. As shown in Fig. 8, the charging station 1 has a structure in which a top wall 22 of the housing 2 is open.

0042 As shown in Figs. 9A and 9B, the solar panels 3 are provided on both sides of an opening/closing part 22a, which is a part of the top wall 22. The fence 11 is provided a position inside the housing 2 facing to the opening/closing part 22a, i.e., a position near the top surface in the housing 2, and the charger device 8 of the uncrewed aircraft 10 is provided on a top surface of the fence 11. The uncrewed aircraft 10 lands on the charger device 8 on the top surface of the fence 11. The opening/closing part 22a is supported by the tower 15 in an open state. 0043 According the charging station 1 according to this embodiment, since the solar panels 3 are provided on both sides of the opening/closing part 22a, the solar panel 3 can receive solar light and generate power regardless of whether the opening/closing part 22a is in a closed state or an open state.

0044 While preferred embodiments have thus been discussed with reference to the drawings, various additions, modifications, or omissions can be made therein without departing from the principle of the present invention and are, thus, also encompassed within the scope of the present invention.

### (Reference Symbols)

- 1: charging station
- 2: housing
- 3: solar panel
- 4: wind turbine
- 5: power generator equipment
- 6: storage battery
- 7: controller unit
- 8: charger device
- 10: uncrewed aircraft
- 11: protection fence (fence)
- 12a, 22a: opening/closing part
- 14: guy wire
- 15: tower
- 20: entrance

## Claims

1. A charging station comprising:
a charger device capable of charging an uncrewed aircraft;
a power generator equipment including at least one of a photovoltaic generator unit and a wind turbine generator unit;
a storage battery configured to store power generated by the power generator equipment;
a controller unit configured to execute control so as to direct power generated by the power generator equipment into the storage battery and draw power accumulated in the storage battery into the charger device; and
a housing configured to house the storage battery and the controller unit; wherein
an opening/closing part is provided in the housing;
the charger device is provided inside the opening/closing part or the housing; and
the uncrewed aircraft landing on the charger device is housed in the housing by closing the opening/ closing part.

2. The charging station as claimed in claim 1, wherein the opening/closing part is provided on a side wall or a top wall.

3. The charging station as claimed in claim 1 or 2, wherein a protection fence facing the opening/closing part is provided inside the housing.

4. The charging station as claimed in claim 1 or 2, wherein the housing is a transportable container.

5. The charging station as claimed in claim 1 or 2, wherein the charging station has a communication device that opens and closes the opening/closing part, monitors the condition of the uncrewed aircraft, the power generator equipment, the storage battery and the charger device, and charges the uncrewed aircraft from the outside of the housing.
